# EUROPEAN PATENT SPECIFICATION

(11) **EP 4 213 002 B1**
(45) Date of publication and mention of the grant of the patent: **04.11.2026**
(21) Application number: 22199314.0
(22) Date of filing: 01.10.2022
(51) Int. Cl.: G06F 3/04817

(54) **INFORMATION PROCESSING APPARATUS, INFORMATION PROCESSING METHOD, AND PROGRAM**
INFORMATIONSVERARBEITUNGSVORRICHTUNG, INFORMATIONSVERARBEITUNGSVERFAHREN UND PROGRAMM
APPAREIL DE TRAITEMENT D'INFORMATIONS, PROCÉDÉ DE TRAITEMENT D'INFORMATIONS ET PROGRAMME

(30) Priority: 17.01.2022 JP 2022005319
(43) Date of publication of application: 19.07.2023
(73) Proprietor: Fujifilm Business Innovation Corp., Tokyo 107-0052 (JP)
(72) Inventor: MOTOKI, Yuichi, Yokohama (JP); YAMADA, Masahiro, Yokohama (JP); KASHIWAGI, Naoto, Yokohama (JP)
(74) Representative: Meissner Bolte Partnerschaft mbB

(56) References cited:
- JP-A- 2004 302 892
- US-A1- 2020 304 561

## Description

### Background

### (i) Technical Field

The present disclosure relates to an information processing apparatus, an information processing method, and a program.

### (ii) Related Art

For example, Japanese Unexamined Patent Application Publication No. 2020-154873 describes an information processing apparatus that performs a specific operation on data stored in an external device. This information processing apparatus includes a receiving unit that receives an instruction to perform a predetermined operation on data stored in an external device from a terminal apparatus of a user, a first controller that performs control of causing the data stored in the external device to be stored in a storage unit of the information processing apparatus in response to the instruction received by the receiving unit, an execution unit that executes the instruction on the data stored in the storage unit, and a second controller that performs control of causing the data on which the instruction has been executed by the execution unit to be stored in the external device.

Furthermore, Japanese Unexamined Patent Application Publication No. 2004-302892 describes an information sharing assistance method for assisting sharing of information among plural users using a computer. According to this information sharing assistance method, shared information is associated with a first symbol having plural states, a state of the first symbol is changed depending on a state of access to the information, and the first symbol whose state has been changed is displayed on a display screen. Documents US2020304561 A1 and JP2004302892A represent further prior art.

### Summary

A technique of displaying, on a representative image, the number of users viewing or editing a document file in a shared folder is known. Furthermore, a technique of displaying, on a representative image, a user name of a user viewing or editing a document file in a shared folder is known.

Furthermore, a technique of, when a user opens a document file, displaying a part of the document file which another user is viewing or editing on the opened document file is also known.

However, a part of a document file which another user is viewing or editing is not displayed on a representative image, and therefore the document file needs to be opened in order to recognize the part.

Accordingly, it is an object of the present disclosure to provide an information processing apparatus, an information processing method, and a program that, in a case where another user is viewing or editing a document file, allows a user to recognize, on a representative image, a part which the other user is viewing or editing without opening the document file.

According to a first aspect of the present disclosure, there is provided an information processing apparatus including a processor configured to: display a representative image representing a document file shared by plural users on a screen of a terminal apparatus of a user, a single representative image being prepared for a single document file; and in a case where another user is viewing or editing the document file, display information indicative of the other user and information indicative of a part of the document file which the other user is viewing or editing while displaying the representative image.

In the information processing apparatus according to the first aspect, the information processing apparatus according to a second aspect is configured such that the processor is configured to display a user image indicative of the other user on the representative image.

In the information processing apparatus according to the second aspect, the information processing apparatus according to a third aspect is configured such that the processor is configured to display the user image so that a form in which the user image is displayed in a case where the other user is viewing the document file and a form in which the user image is displayed in a case where the other user is editing the document file are different.

In the information processing apparatus according to the second or third aspect, the information processing apparatus according to a fourth aspect is configured such that the processor is configured to display the information indicative of the other user and the information indicative of the part in association with the user image in a case where an operation of the user on the user image is detected.

In the information processing apparatus according to the fourth aspect, the information processing apparatus according to a fifth aspect is configured such that the information indicative of the part includes a page number indicative of the part and a page image showing a whole page of the page number.

In the information processing apparatus according to the fifth aspect, the information processing apparatus according to a sixth aspect is configured such that the processor is configured to display an enlarged image in association with the page image in a case where an operation of the user on the page image is detected, the enlarged image being an image in which a portion of the page image that corresponds to a position where the operation of the user is detected is dynamically enlarged.

In the information processing apparatus according to any one of the first to sixth aspects, the information processing apparatus according to a seventh aspect is configured such that the other user is plural other users; and the processor is configured to display plural user images indicative of the plural other users on the representative image.

In the information processing apparatus according to the seventh aspect, the information processing apparatus according to an eighth aspect is configured such that the processor is configured to dynamically enlarge a user image corresponding to a position where an operation of the user is detected among the plural user images.

In the information processing apparatus according to the seventh or eighth aspect, the information processing apparatus according to a ninth aspect is configured such that the processor is configured to display the plural user images indicative of the plural other users in a descending order of priority set in advance for each of the plural other users in a case where the plural user images indicative of the plural other users are displayed on the representative image.

In the information processing apparatus according to any one of the first to ninth aspect, the information processing apparatus according to a tenth aspect is configured such that the processor is configured to display an image indicative of the number of other users on the representative image.

In the information processing apparatus according to the tenth aspect, the information processing apparatus according to an eleventh aspect is configured such that the processor is configured to display, in association with the image indicative of the number of other users, a list of information concerning viewing or editing of the other user(s) in a case where an operation of the user on the image indicative of the number of other users is detected.

In the information processing apparatus according to any one of the first to eleventh aspects, the information processing apparatus according to a twelfth aspect is configured such that the processor is configured to transmit a message inquiring a state of viewing or editing of the other user to the other user.

According to a thirteenth aspect of the present disclosure, there is provided a program according to a thirteenth aspect causing a computer to execute a process for information processing, the process including: displaying a representative image representing a document file shared by plural users on a screen of a terminal apparatus of a user, a single representative image being prepared for a single document file; and in a case where another user is viewing or editing the document file, displaying information indicative of the other user and information indicative of a part of the document file which the other user is viewing or editing while displaying the representative image.

According to a fourteenth aspect of the present disclosure, there is provided an information processing method including: displaying a representative image representing a document file shared by plural users on a screen of a terminal apparatus of a user, a single representative image being prepared for a single document file; and in a case where another user is viewing or editing the document file, displaying information indicative of the other user and information indicative of a part of the document file which the other user is viewing or editing while displaying the representative image.

According to the first, thirteenth, and fourteenth aspects of the present disclosure, in a case where another user is viewing or editing a document file, a part which the other user is viewing or editing can be checked on a representative image without opening the document file.

According to the second aspect, it is possible to grasp at a glance that there is another user who is viewing or editing a document file.

According to the third aspect, it is possible to grasp at a glance whether the other user is viewing the document file or editing the document file.

According to the fourth aspect, a display region of a screen is not occupied as compared with a case where information indicative of the other user and information indicative of the part are always displayed.

According to the fifth aspect, viewability of the part which the other user is viewing or editing can be improved as compared with a case where only a page number is displayed.

According to the sixth aspect, viewability of the part which the other user is viewing or editing can be further improved as compared with a case where a portion of the page image that corresponds to a position where the operation of the user is detected is displayed as it is.

According to the seventh aspect, even in a case where plural other users are viewing or editing a document file, a part which the plural other users are viewing or editing can be checked on the representative image without opening the document file.

According to the eighth aspect, a user image can be easily grasped as compared with a case where plural user images are displayed as they are.

According to the ninth aspect, a user of a high priority in sharing of a document file can be grasped in a case where plural user images are displayed on the representative image.

According to the tenth aspect, it is possible to grasp at a glance the number of other users who are viewing or editing a document file.

According to the eleventh aspect, a display region of a screen is not occupied as compared with a case where information concerning viewing or editing of the other user is always displayed.

According to the twelfth aspect, a state of viewing or editing of the other user can be grasped by giving an inquiry to the other user.

### Brief Description of the Drawings

An exemplary embodiment of the present disclosure will be described in detail based on the following figures, wherein:
Fig. 1 is a diagram illustrating an example of a configuration of a document management system according to an exemplary embodiment;
Fig. 2 is a block diagram illustrating an example of an electric configuration of the document management apparatus according to the exemplary embodiment;
Fig. 3 is a block diagram illustrating an example of a functional configuration of the document management apparatus according to the exemplary embodiment;
Fig. 4 is a front view illustrating an example of a shared work screen including a document file icon image according to the exemplary embodiment;
Fig. 5 is a front view illustrating an example of a shared work screen including a user access information according to the exemplary embodiment;
Fig. 6 is a front view illustrating an example of a shared work screen including a user icon image according to the exemplary embodiment;
Fig. 7 is a front view illustrating an example of a shared work screen including plural user icon images according to the exemplary embodiment;
Fig. 8 illustrates an example of a page thumbnail image and an enlarged image according to the exemplary embodiment;
Fig. 9 illustrates an example of dynamically enlarged user icon images according to the exemplary embodiment;
Fig. 10 is a front view illustrating an example of a display setting screen according to the exemplary embodiment;
Fig. 11 is a view for explaining a method for transmitting an inquiry message according to the exemplary embodiment; and
Fig. 12 is a flowchart illustrating an example of a flow of processing of a document management program according to the exemplary embodiment.

### Detailed Description

An exemplary embodiment of the technique of the present disclosure is described in detail below with reference to the drawings. Note that constituent elements and processes that are identical in terms of operation, action, or function are given identical reference signs throughout the drawings, and repeated description thereof is omitted as appropriate. The drawings merely schematically illustrate the technique of the present disclosure to such a degree that the technique of the present disclosure is fully understood. Therefore, the technique of the present disclosure is not limited to illustrated examples. Furthermore, in the present exemplary embodiment, description of constituent elements that are not directly related to the present disclosure and well-known constituent elements is omitted in some cases.

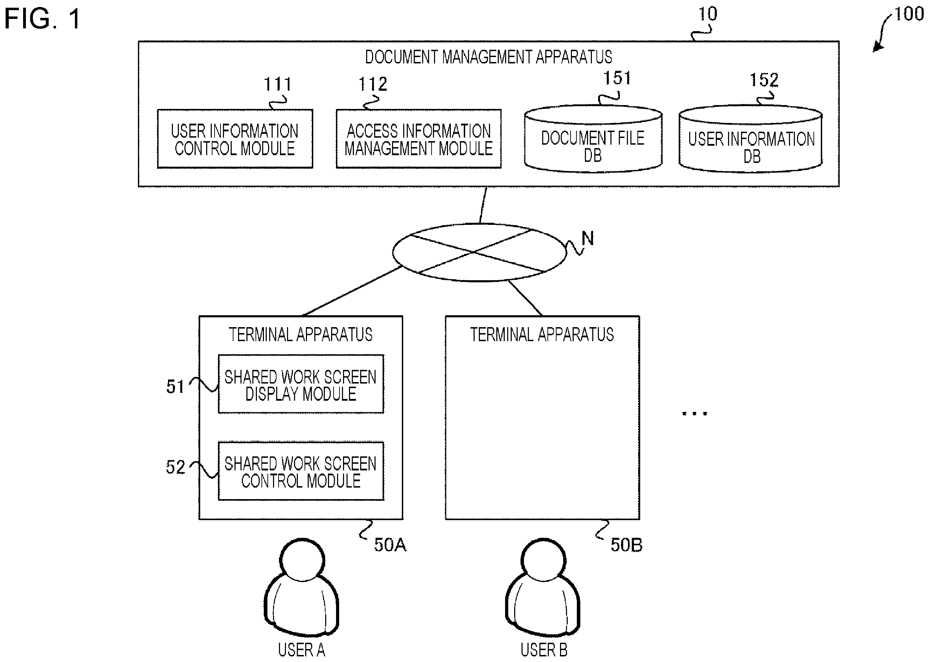

Fig. 1 is a diagram illustrating an example of a configuration of a document management system 100 according to the present exemplary embodiment.

As illustrated in Fig. 1, the document management system 100 according to the present exemplary embodiment includes a document management apparatus 10 and plural terminal apparatuses 50A, 50B, .... The document management apparatus 10 is an example of an information processing apparatus.

As the document management apparatus 10 according to the present exemplary embodiment, a general-purpose computer apparatus such as a personal computer (PC) or a server computer is applied, for example. The document management apparatus 10 may be used on cloud or on-premise. The "cloud" refers to a form in which a company or the like uses an external computer resource over the Internet, and the "on-premise" refers to a form in which a company or the like possesses a computer resource and uses the computer resource. The document management apparatus 10 is connected to the plural terminal apparatuses, 50A, 50B, ... over a network N. Note that as the network N, the Internet, a local area network (LAN), a wide area network (WAN), or the like is applied.

As the plural terminal apparatuses, 50A, 50B, ... according to the present exemplary embodiment, various kinds of devices such as PCs, smartphones, or tablet terminals used by users are applied, for example. A terminal apparatus used by a user A is referred to as the terminal apparatus 50A, and a terminal apparatus used by a user B is referred to as the terminal apparatus 50B. Note that the plural terminal apparatuses, 50A, 50B, ... are collectively referred to as a terminal apparatus 50 in a case where they need not be distinguished from one another.

The document management apparatus 10 includes a user information control module 111, an access information management module 112, a document file database (DB) 151, and a user information database (DB) 152.

The document file DB 151 is a database in which a document file shared by plural users is stored. The document file is constituted by document data having a data format of a document management application or program (hereinafter referred to as a "document management app") installed in the terminal apparatus 50. The document data may be constituted only by a text or may be constituted by a text and an image.

The user information DB 152 is a database in which plural pieces of user information concerning plural users who share a document file are stored. The user information includes, for example, information on a user identification (ID), a name, an e-mail address, and a department to which a user belongs. The user information is associated with the document file.

The user information control module 111 and the access information management module 112 are modules realized as functions of a document management program, which will be described later, and operate in cooperation with the document management app of the terminal apparatus 50.

The user information control module 111 performs control of registering user information (e.g., a user ID) in the user information DB 152 in response to a user's registration request. Furthermore, the user information control module 111 controls authentication of user information in response to a user's login request.

The access information management module 112 manages access information concerning user's access to a document file. The access information includes information concerning a user's operation on a document file.

The terminal apparatus 50 includes a shared work screen display module 51 and a shared work screen control module 52. The shared work screen display module 51 and the shared work screen control module 52 are modules realized as functions of the document management app and operate in cooperation with the document management program of the document management apparatus 10.

The shared work screen display module 51 displays a shared work screen, which will be described later, in accordance with an instruction from the document management apparatus 10.

The shared work screen control module 52 controls information to be displayed on the shared work screen in accordance with an instruction from the document management apparatus 10.

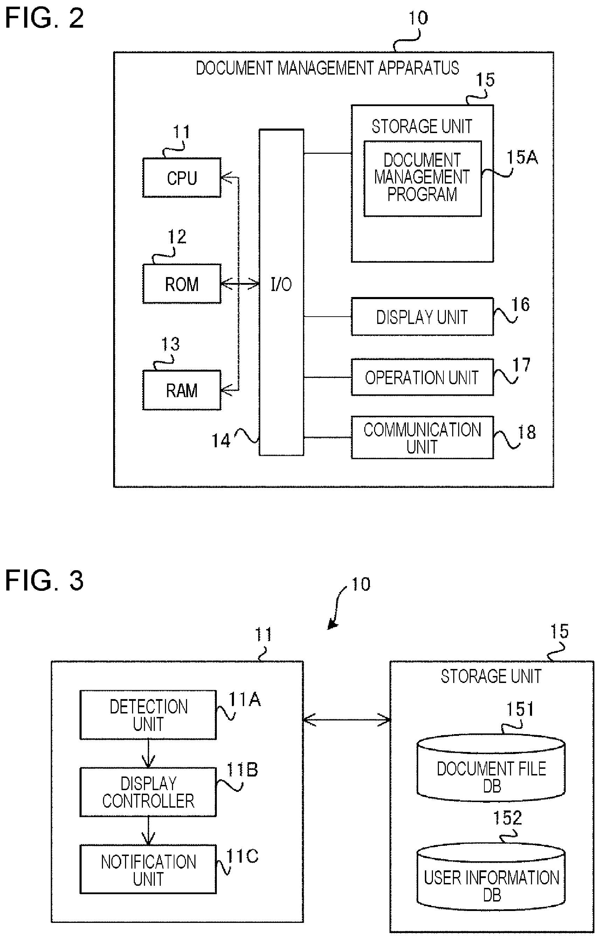

Fig. 2 is a block diagram illustrating an example of an electric configuration of the document management apparatus 10 according to the present exemplary embodiment.

As illustrated in Fig. 2, the document management apparatus 10 according to the present exemplary embodiment includes a central processing unit (CPU) 11, a read only memory (ROM) 12, a random access memory (RAM) 13, an input/output interface (I/O) 14, a storage unit 15, a display unit 16, an operation unit 17, and a communication unit 18.

The CPU 11, the ROM 12, the RAM 13, and the I/O 14 are connected to one another through a bus. To the I/O 14, functional units including the storage unit 15, the display unit 16, the operation unit 17, and the communication unit 18 are connected. These functional units are communicable with the CPU 11 through the I/O 14.

The CPU 11, the ROM 12, the RAM 13, and the I/O 14 constitute a controller. The controller may be a sub-controller that controls operation of a part of the document management apparatus 10 or may be a part of a main controller that controls operation of the whole document management apparatus 10. As one or more of the blocks of the controller, an integrated circuit such as a large scale integration (LSI) or an integrated circuit (IC) chip set is used. Individual circuits may be used as the blocks or a circuit on which some or all of the blocks are integrated may be used. The blocks may be integral with one another or there may be a block that is separately provided. Furthermore, each of the blocks may have a part that is separately provided. Integration of the controller is not limited to LSI and may be realized by a dedicated circuit or a general-purpose processor.

As the storage unit 15, a hard disk drive (HDD), a solid state drive (SSD), a flash memory, or the like is used, for example. In the storage unit 15, a document management program 15A according to the present exemplary embodiment is stored. Note that the document management program 15A may be stored in the ROM 12. The document management program 15A is an example of an information processing program.

The document management program 15A may be, for example, installed in advance in the document management apparatus 10. The document management program 15A may be stored in a non-volatile recording medium or distributed over the network N, and this document management program 15A may be installed in the document management apparatus 10 as appropriate. Note that assumed examples of the non-volatile recording medium include a compact disc read only memory (CD-ROM), a magnetooptical disc, an HDD, a digital versatile disc read only memory (DVD-ROM), a flash memory, and a memory card. The document management program 15A operates in cooperation with the document management app of the terminal apparatus 50.

As the display unit 16, a liquid crystal display (LCD), an organic EL (electro luminescence) display, or the like is used, for example. The display unit 16 may have a touch panel as a part thereof. As the operation unit 17, a device for entry of an operation such as a keyboard or a mouse is provided, for example. The display unit 16 and the operation unit 17 receive various kinds of instructions from a user of the document management apparatus 10. The display unit 16 displays a result of processing performed in response to an instruction received from the user and various kinds of information such as a notification concerning processing.

The communication unit 18 is connected to the network N such as the internet, a LAN, or a WAN and is communicable with each of the plural terminal apparatuses 50 over the network N.

As described above, a part of a document file which another user is viewing or editing is not displayed on a representative image, and therefore the document file needs to be opened in order to recognize the part. Note that the representative image is an image representing a document file shared by plural users, and a single representative image is prepared for a single document file. The representative image is, for example, an icon image, and an image such as an image of a front cover of a document file is used. Hereinafter, in the present exemplary embodiment, a representative image of a document file is referred to as a "document file icon image".

In view of this, the document management apparatus 10 according to the present exemplary embodiment causes a document file icon image to be displayed on a screen of a user's terminal apparatus 50, and in a case where another user is viewing or editing a document file, causes information indicative of the other user and information indicative of a part of the document file which the other user is viewing or editing to be displayed while displaying the document file icon image.

Specifically, the CPU 11 of the document management apparatus 10 according to the present exemplary embodiment writes the document management program 15A stored in the storage unit 15 into the RAM 13 and executes the document management program 15A, and thus functions as the units illustrated in Fig. 3. Note that the CPU 11 is an example of a processor.

Fig. 3 is a block diagram illustrating an example of a functional configuration of the document management apparatus 10 according to the present exemplary embodiment.

As illustrated in Fig. 3, the CPU 11 of the document management apparatus 10 according to the present exemplary embodiment functions as a detection unit 11A, a display controller 11B, and a notification unit 11C. The detection unit 11A, the display controller 11B, and the notification unit 11C are realized as functions of the access information management module 112.

In the storage unit 15, the document file DB 151 and the user information DB 152 are stored. Note that the document file DB 151 and the user information DB 152 may be stored in an external storage device that can be accessed by the document management apparatus 10.

The detection unit 11A detects access information concerning access to a document file from each of the plural terminal apparatuses 50 used by plural users.

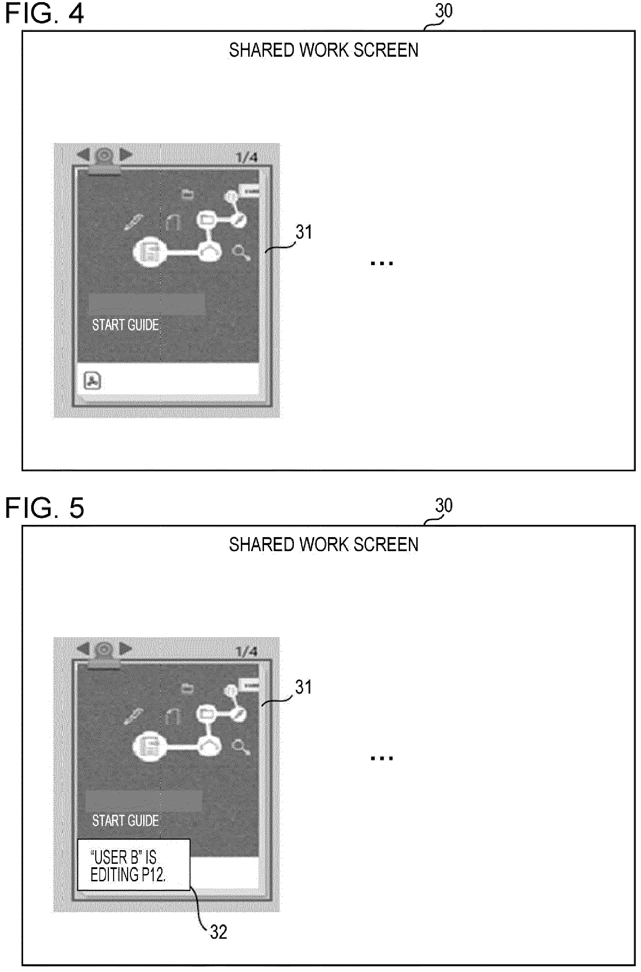

The display controller 11B performs, for example, control of displaying the shared work screen 30 illustrated in Fig. 4 on the terminal apparatus 50 on the basis of the access information detected by the detection unit 11A. The shared work screen 30 includes a document file icon image 31.

Fig. 4 is a front view illustrating an example of the shared work screen 30 including the document file icon image 31 according to the present exemplary embodiment.

On the shared work screen 30 illustrated in Fig. 4, the document file icon image 31 representing a document file shared by plural users is displayed. It is assumed that the shared work screen 30 illustrated in Fig. 4 is displayed, for example, on the terminal apparatus 50A of the user A.

In a case where a user (another user) other than the user A is not viewing or editing the document file associated with the document file icon image 31, nothing is displayed on the document file icon image 31.

In a case where another user is viewing or editing the document file associated with the document file icon image 31, the display controller 11B performs, for example, control of displaying user access information 32 while displaying the document file icon image 31, as illustrated in Fig. 5. The user access information 32 includes information (e.g., a name of the user B) indicative of the other user and information (e.g., P12) indicative of a part of the document file which the other user is viewing or editing.

Fig. 5 is a front view illustrating an example of the shared work screen 30 including the user access information 32 according to the present exemplary embodiment.

The document file icon image 31 is displayed on the shared work screen 30 illustrated in Fig. 5, and since the other user has accessed the document file and is viewing or editing the document file, the user access information 32 is displayed on the document file icon image 31. In the example of Fig. 5, it is assumed that the user B, who is an example of another user, has accessed the document file from the terminal apparatus 50B and is viewing or editing the document file. In this case, the user access information 32 concerning the user B is displayed on the document file icon image 31 displayed on the terminal apparatus 50A of the user A. The user access information 32 concerning the user B includes information indicative of the user B and information indicative of a part of the document file which the user B is viewing or editing. The information indicative of the user B may be, for example, any information from which the user B can be identified, such as a name or a user ID of the user B. The information indicative of a part of the document file which the user B is viewing or editing may be, for example, any information from which the part can be identified, such as a page number indicative of the part.

Note that the user access information 32 may be always displayed on the document file icon image 31 or may pop up upon detection of a user A's operation such as a mouseover on the document file icon image 31.

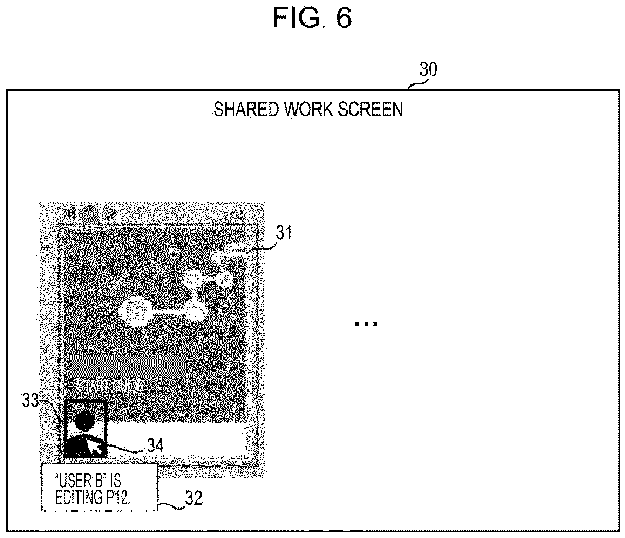

Furthermore, the display controller 11B may perform, for example, control of displaying a user icon image 33, which is an example of a user image indicative of the other user, on the document file icon image 31, as illustrated in Fig. 6.

Fig. 6 is a front view illustrating an example of the shared work screen 30 including the user icon image 33 according to the present exemplary embodiment.

The document file icon image 31 is displayed on the shared work screen 30 illustrated in Fig. 6, and since another user has accessed the document file and is viewing or editing the document file, the user icon image 33 is displayed on the document file icon image 31. In the example of Fig. 6, it is assumed that the user B, who is an example of another user, has accessed the document file from the terminal apparatus 50B and is viewing or editing the document file, as in the example of Fig. 5. In this case, the user icon image 33 concerning the user B is displayed on the document file icon image 31 displayed on the terminal apparatus 50A of the user A.

As illustrated in Fig. 6, when the user A moves a cursor 34 over the user icon image 33 (mouseover), the user access information 32 pops up in response to the mouseover.

That is, the display controller 11B performs control of displaying the user access information 32 in association with the user icon image 33 in a case where the detection unit 11A detects a user A's operation (e.g., mouseover) on the user icon image 33.

Whether the user B is viewing the document file or editing the document file may be made distinguishable by changing a display form of the user icon image 33. Specifically, a form in which the user icon image 33 is displayed in a case where the user B is viewing the document file and a form in which the user icon image 33 is displayed in a case where the user B is editing the document file are made different. For example, a color of a frame of the user icon image 33 may be changed. In a case where the user B is viewing the document file, the color of the frame of the user icon image 33 is set to "gray", and in a case where the user B is editing the document file, the color of the frame of the user icon image 33 is set to "red", and thereby whether the user B is viewing the document file or editing the document file is made distinguishable. Note that the display form of the user icon image 33 is not limited to the color of the frame, and may be any distinguishable form such as a line type of the frame, a thickness of the frame, a color of the image itself, or a size of the image itself.

According to the above configuration, it is possible to easily recognize a status of access from another user to a document file, and trouble of opening the document file each time becomes unnecessary.

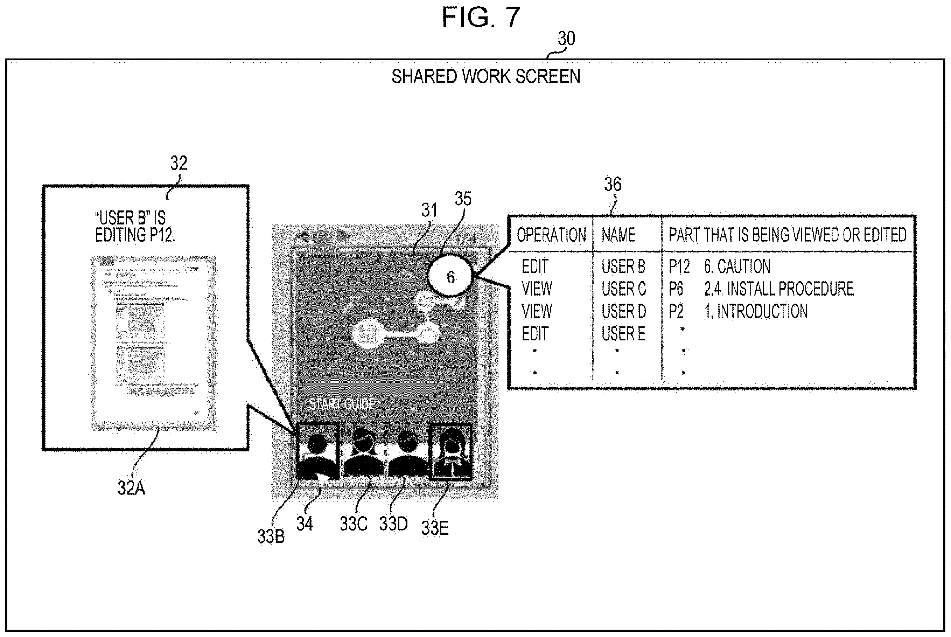

The other user may be plural other users. In this case, the display controller 11B performs, for example, control of displaying plural user icon images 33B to 33E indicative of the plural other users on the document file icon image 31, as illustrated in Fig. 7.

Fig. 7 is a front view illustrating an example of the shared work screen 30 including the plural user icon images 33B to 33E according to the present exemplary embodiment.

The document file icon image 31 is displayed on the shared work screen 30 illustrated in Fig. 7, and since plural other users have accessed the document file and are viewing or editing the document file, the plural user icon images 33B to 33E are displayed on the document file icon image 31. In the example of Fig. 7, it is assumed that users B, C, D, and E, who are an example of plural other users, have accessed the document file from their terminal apparatuses 50 and are viewing or editing the document file. In this case, the user icon image 33B concerning the user B, the user icon image 33C concerning the user C, the user icon image 33D concerning the user D, and the user icon image 33E concerning the user E are displayed on the document file icon image 31 displayed on the terminal apparatus 50A of the user A.

In Fig. 7, a color of a frame of the user icon image 33B concerning the user B and a color of a frame of the user icon image 33E concerning the user E are "red". This shows that the user B and the user E are editing the document file. In Fig. 7, a color of a frame of the user icon image 33C concerning the user C and a color of a frame of the user icon image 33D concerning the user D are "gray". This shows that the user C and the user D are viewing the document file. Note, however, that in the example of Fig. 7, a difference in color of the frame is indicated by a difference in line type. Specifically, the solid line indicates "red", and the dashed line indicates "gray".

As illustrated in Fig. 7, when the user A moves the cursor 34 over the user icon image 33B (mouseover), the user access information 32 pops up in association with the user icon image 33B in response to the mouseover. The user access information 32 includes a page number (e.g., P12) indicative of a part which the user B is editing and a page thumbnail image 32A indicative of a whole page of the page number. The page thumbnail image 32A is an example of a page image.

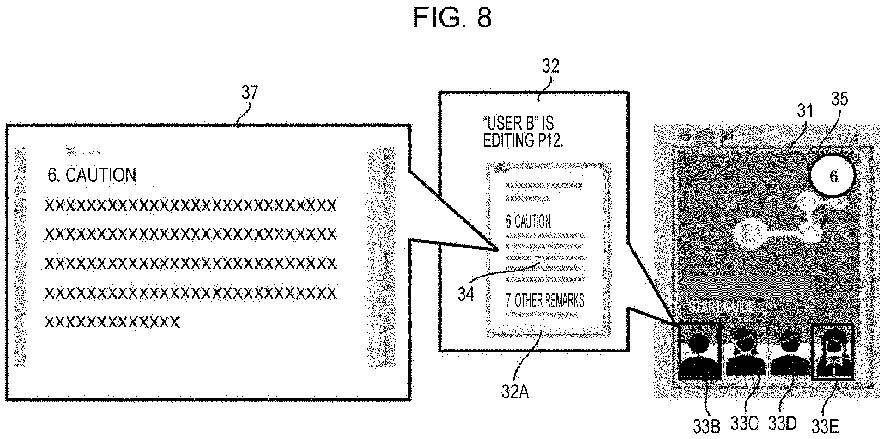

A portion of the page thumbnail image 32A may be dynamically enlarged. In this case, for example, in a case where a user A's operation (e.g., mouseover) on the page thumbnail image 32A is detected by the detection unit 11A, the display controller 11B performs control of displaying, in association with the page thumbnail image 32A, an enlarged image 37 in which a portion of the page thumbnail image 32A corresponding to a position where the user A's operation is detected is dynamically enlarged, as illustrated in Fig. 8.

Fig. 8 illustrates an example of the page thumbnail image 32A and the enlarged image 37 according to the present exemplary embodiment.

As illustrated in Fig. 8, when the user A moves the cursor 34 over the page thumbnail image 32A (mouseover), the enlarged image 37 pops up in association with the page thumbnail image 32A in response to the mouseover. The enlarged image 37 is an image in which a portion of the page thumbnail image 32A that corresponds to a position where the user A's mouseover is detected is dynamically enlarged. That is, the enlarged image 37 changes depending on a position of the cursor 34 on the page thumbnail image 32A. Note that in a case where the page thumbnail image 32A that is being edited is enlarged, it is desirable that the page thumbnail image 32A be enlarged so that a portion that is being edited in the page is displayed at a center. Furthermore, it is desirable that a balloon of the user access information 32 and a balloon of the enlarged image 37 continue to be displayed until a clicking operation is detected at a position away from these two balloons or the document file icon image 31.

In a case where a large number of users are accessing the same document file, the number of users may be displayed on the document file icon image 31, and the number of users displayed as user icon images may be, for example, restricted to three to five. Specifically, the display controller 11B performs, for example, control of displaying a badge image 35 on the document file icon image 31, as illustrated in Fig. 7. The badge image 35 is an example of an image indicative of the number of other users. In the example of Fig. 7, "6" is displayed in the badge image 35, but the number of users displayed as user icon images is restricted to four.

As described above, the badge image 35 indicative of the number of users who are viewing or editing the document file is displayed on the document file icon image 31 illustrated in Fig. 7. In this case, when the user A moves the cursor 34 over the badge image 35 (mouseover), a user list 36 pops up in response to the mouseover.

That is, the display controller 11B performs control of displaying the user list 36 in association with the badge image 35 in a case where a user A's operation (e.g., mouseover) on the badge image 35 is detected by the detection unit 11A. The user list 36 is a list of information concerning other users' viewing or editing. The user list 36 includes, for example, names of the other users, a type of operation (viewing or editing), and a part that is being viewed or edited. In the example of Fig. 7, six other users are accessing the same document file.

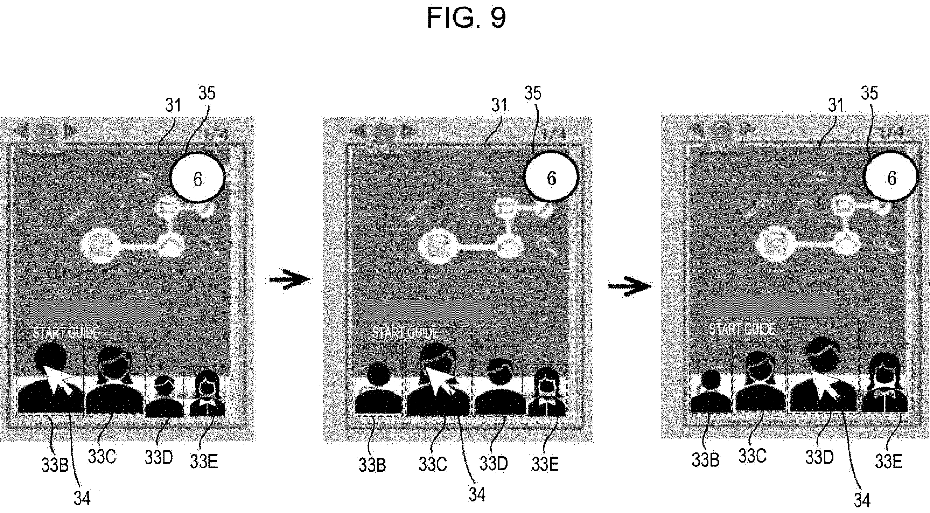

Furthermore, the plural user icon images 33B to 33E may be dynamically enlarged. In this case, for example, the display controller 11B dynamically enlarges a position where a user A's operation (e.g., mouseover) is detected among the plural user icon images 33B to 33E, that is, a user icon image corresponding to the position of the cursor 34, as illustrated in Fig. 9. In this case, it is desirable that the user icon image corresponding to the position where the user A's operation is detected (the position of the cursor 34) be dynamically enlarged so as not to overlap an adjacent user icon image.

Fig. 9 illustrates an example of the dynamically enlarged user icon images 33B to 33E according to the present exemplary embodiment. Note that a display form of the user icon images 33B to 33E changes in a direction indicated by the arrow (a direction from left to right) in Fig. 9 in accordance with movement of the cursor 34.

As illustrated in Fig. 9, first, the user A moves the cursor 34 over the user icon image 33B (mouseover). In this state, among the user icon images 33B to 33E, the user icon image 33B is displayed in an enlarged size, the adjacent user icon image 33C is displayed in a standard size (in a default size), and the user icon image 33D and the user icon image 33E far from the user icon image 33B are displayed in a reduced size. That is, the user icon images are adjusted to appropriate image sizes in accordance with the enlargement of the user icon image 33B so as not to overlap each other. That is, a user icon image closer to the position of the cursor 34 is enlarged to have a larger size.

Next, the user A moves the cursor 34 from the user icon image 33B and places the cursor 34 over the user icon image 33C. In this state, among the user icon images 33B to 33E, the user icon image 33C is displayed in an enlarged size, the adjacent user icon image 33B and user icon image 33D are displayed in a standard size (in a default size), and the user icon image 33E far from the user icon image 33C is displayed in a reduced size. That is, the user icon images are adjusted to appropriate image sizes in accordance with the enlargement of the user icon image 33C so as not to overlap each other.

Next, the user A moves the cursor 34 from the user icon image 33C and places the cursor 34 over the user icon image 33D. In this state, among the user icon images 33B to 33E, the user icon image 33D is displayed in an enlarged size, the adjacent user icon image 33C and user icon image 33E are displayed in a standard size (in a default size), and the user icon image 33B far from the user icon image 33D is displayed in a reduced size. That is, the user icon images are adjusted to appropriate image sizes in accordance with the enlargement of the user icon image 33D so as not to overlap each other.

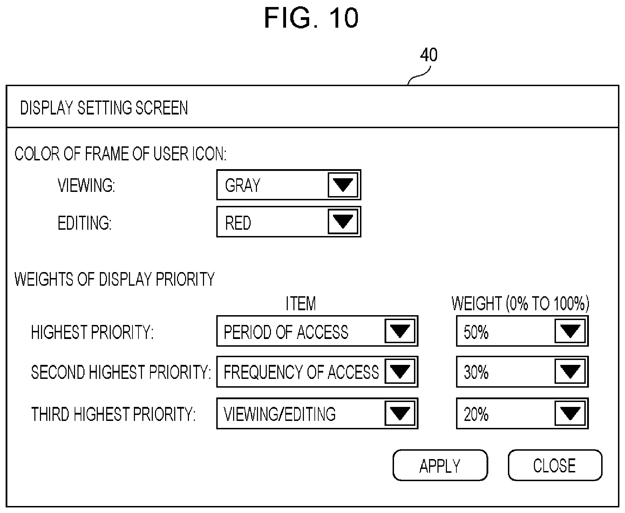

In Fig. 7, in a case where the display controller 11B displays plural user icon images indicative of plural other users on the document file icon image 31, the plural user icon images may be displayed in a descending order of priority set in advance for each of the plural other users. The priority is, for example, set by weights for respective items designated by a user, as illustrated in Fig. 10.

Fig. 10 is a front view illustrating an example of a display setting screen 40 according to the present exemplary embodiment.

The display setting screen 40 illustrated in Fig. 10 is, for example, displayed on the terminal apparatus 50A of the user A. The display setting screen 40 includes "COLOR OF FRAME OF USER ICON" and "WEIGHTS OF DISPLAY PRIORITY". In the "COLOR OF FRAME OF USER ICON", a color of a frame of a user icon image can be set by the user A. In the example of Fig. 10, a color of a frame of a user icon image of a user who is viewing a document file is set to "GRAY", and a color of a frame of a user icon image of a user who is editing a document file is set to "RED". However, the colors of the frames of these user icon images are not limited to this combination.

In the "WEIGHTS OF DISPLAY PRIORITY", a weight (0% to 100%) is set for each item designated by the user A. In the example of Fig. 10, an item "PERIOD OF ACCESS" and a weight "50%" are designated as the highest priority, an item "FREQUENCY OF ACCESS" and a weight "30%" are designated as the second highest priority, and an item "VIEWING/EDITING" and a weight "20%" are designated as the third highest priority. The "PERIOD OF ACCESS" is a period of access to a sharable document file using the document management app by another user. The "PERIOD OF ACCESS" is acquired from each user's history information of a period of access during a predetermined period (e.g., the last one month). The "FREQUENCY OF ACCESS" is a frequency of access to the sharable document file using the document management app by another user. The "FREQUENCY OF ACCESS" is acquired from each user's history information of a frequency of access during a predetermined period (e.g., the last one month). The "VIEWING/EDITING" indicates that another user is viewing or editing a sharable document file by using the document management app. The "VIEWING/EDITING" is, for example, "1" in a case where another user is viewing or editing the document file, and the "VIEWING/EDITING" is, for example, "0" in a case where another user is not viewing or editing the document file.

In Fig. 7, a display priority is calculated for each of the users B to E, who are an example of other users, and an order of priority is decided on the basis of the display priorities thus calculated. For example, a display priority P for each user can be calculated by using the following formula (1) assuming that the "PERIOD OF ACCESS" is represented by "T" and a weight thereof is "0.5", the "FREQUENCY OF ACCESS" is represented by "F" and a weight thereof is "0.3", and the "VIEWING/EDITING" is represented by E (= 1 or 0) and a weight thereof is "0.2". $P = T \times 0.5 + F \times 0.3 + E \times 0.2$ (1)

In the above example, a higher priority is given as the display priority P becomes higher. In this case, the display controller 11B may display a predetermined number of user icon images of other users selected in a descending order of the priority from among the plural other users in a case where not all of user icon images of the plural other users can be displayed on the document file icon image 31. Specifically, in the example of Fig. 7, the number of plural other users is six, and user icon images of four users can be displayed. Accordingly, user icon images of four users selected in a descending order of the priority from among the six other users are selectively displayed.

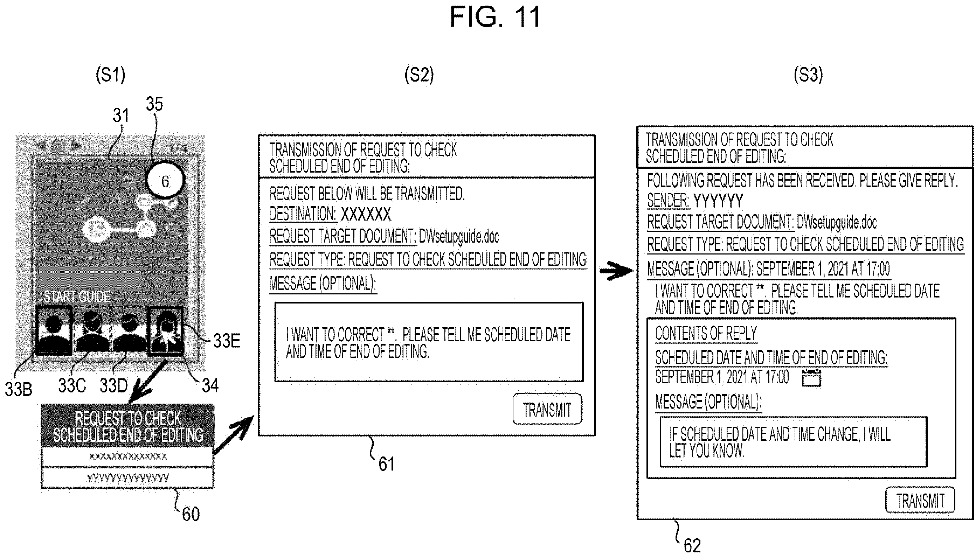

See Fig. 3 again. The notification unit 11C, for example, transmits a message inquiring a state of viewing or editing of another user indicated by a user icon image to the other user, as illustrated in Fig. 11.

Fig. 11 is a view for explaining a method for transmitting an inquiry message according to the present exemplary embodiment. In the example of Fig. 11, it is assumed that the user A inquires a state of viewing or editing, and the user E responds about the state of viewing or editing. However, this is not restrictive.

In (S1) of Fig. 11, when the user A moves the cursor 34 over the user icon image 33E of the user E who is editing the document file among the user icon images 33B to 33E displayed on the document file icon image 31, and, for example, clicks a right mouse button, a context menu 60 concerning "REQUEST TO CHECK SCHEDULED END OF EDITING" is displayed. Note that the context menu 60 may be displayed when the right mouse button is clicked on the user list 36 illustrated in Fig. 7.

In (S2), when the user A selects message transmission on the context menu 60, an inquiry dialogue 61 is displayed. The inquiry dialogue 61 is a screen for transmitting a message inquiring a state of editing of the user E. When the user A presses a "TRANSMIT" button after editing the message on the inquiry dialogue 61, the inquire message of the inquiry dialogue 61 is transmitted to the user E. The inquire message is, for example, "I WANT TO CORRECT **. PLEASE TELL ME SCHEDULED DATE AND TIME OF END OF EDITING."

In (S3), in a case where the user E has activated the document management app and a shared work screen is being displayed on the terminal apparatus 50E, the inquire message received from the user A is displayed as a response dialogue 62. The response dialogue 62 is a screen for entry of a response to the inquiry message from the user A. When the user E presses a "TRANSMIT" button after entering scheduled date and time of end of editing on the response dialogue 62, the scheduled date and time of end of editing of the response dialogue 62 is transmitted to the user A.

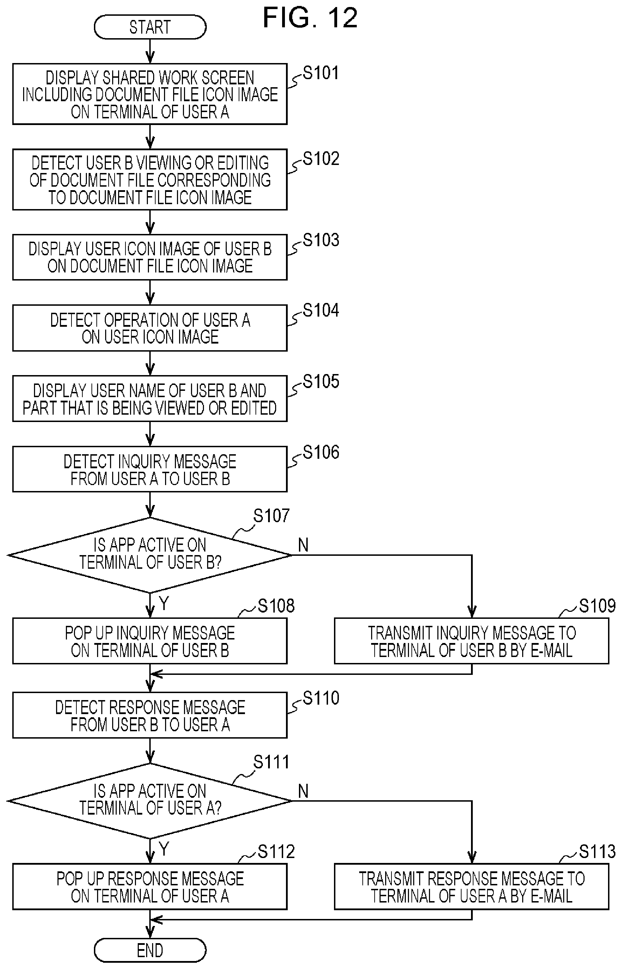

Next, operation of the document management apparatus 10 according to the present exemplary embodiment is described with reference to Fig. 12.

Fig. 12 is a flowchart illustrating an example of a flow of processing of the document management program 15A according to the present exemplary embodiment.

First, for example, when execution of the document management app by the terminal apparatus 50A of the user A is detected by the document management apparatus 10, the document management program 15A is activated by the CPU 11, and the following steps are performed.

In step S101 of Fig. 12, for example, the CPU 11 causes the shared work screen 30 including the document file icon image 31 to be displayed on the terminal apparatus 50A of the user A, as illustrated in Fig. 4.

In step S102, for example, the CPU 11 detects viewing or editing of a document file corresponding to the document file icon image 31 from the terminal apparatus 50B of the user B.

In step S103, for example, the CPU 11 causes the user icon image 33B of the user B to be displayed on the document file icon image 31, as illustrated in Fig. 7.

In step S104, for example, the CPU 11 detects a user A's operation (e.g., mouseover) on the user icon image 33B, as illustrated in Fig. 7.

In step S105, for example, the CPU 11 causes the user access information 32 including a user name of the user B and a part that is being viewed or edited to pop up, as illustrated in Fig. 7.

In step S106, the CPU 11 detects an inquiry message from the user A to the user B. The inquiry message is, for example, a message from the user A inquiring a state of viewing or editing of another user, as illustrated in Fig. 11.

In step S107, the CPU 11 determines whether or not the app is active on the terminal apparatus 50B of the user B. In a case where it is determined that the app is active (in a case where a positive result is obtained), step S108 is performed, whereas in a case where it is determined that the app is not active (in a case where a negative result is obtained), step S109 is performed.

In step S108, the CPU 11 causes the inquiry message from the user A to pop up on the shared work screen displayed on the terminal apparatus 50B of the user B.

On the other hand, in step S109, the CPU 11 transmits the inquiry message from the user A to the terminal apparatus 50B of the user B by e-mail.

In step S110, the CPU 11 detects a response message from the user B to the user A. The response message is, for example, a message from another user for responding concerning a state of viewing or editing to the user A.

In step S111, the CPU 11 determines whether or not the app is active on the terminal apparatus 50A of the user A. In a case where it is determined that the app is active (in a case where a positive result is obtained), step S112 is performed, whereas in a case where it is determined that the app is not active (in a case where a negative result is obtained), step S113 is performed.

In step S112, the CPU 11 causes the response message from the user B to pop up on the shared work screen displayed on the terminal apparatus 50A of the user A and then finishes the series of processing of the document management program 15A.

On the other hand, in step S113, the CPU 11 transmits the response message from the user B to the terminal apparatus 50A of the user A by e-mail and then finishes the series of processing of the document management program 15A.

As described above, according to the present exemplary embodiment, in a case where a document file icon image is displayed on a terminal apparatus of a user and another user is viewing or editing a document file corresponding to the document file icon image, the user can recognize, on the document file icon image, a part that is being viewed or edited without opening the document file.

In the embodiment above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiment above, the term "processor" is broad enough to encompass one processor or plural processors in collaboration which are located physically apart from each other but may work cooperatively. The order of operations of the processor is not limited to one described in the embodiments above, and may be changed.

A document management apparatus has been described as an example of an information processing apparatus according to the exemplary embodiment. The exemplary embodiment may be a form of a program for causing a computer to execute functions of units of the document management apparatus. The exemplary embodiment may be a form of a computer-readable non-transitory recording medium in which the program is stored.

Furthermore, the flow of the processing of the program described in the above exemplary embodiment is also an example, and an unnecessary step may be deleted, a new step may be added, or an order of processes may be changed.

Furthermore, although a case where the processing according to the exemplary embodiment is realized by a software configuration by execution of a program by a computer has been described in the above exemplary embodiment, this is not restrictive. The exemplary embodiment may be, for example, realized by a hardware configuration or a combination of a hardware configuration and a software configuration.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims.

## Claims

1. An information processing apparatus comprising:
a processor configured to:
display a representative image representing a document file shared by a plurality of users on a screen of a terminal apparatus of a user, a single representative image being prepared for a single document file; and
in a case where another user is viewing or editing the document file, display information indicative of the other user and information indicative of a part of the document file which the other user is viewing or editing while displaying the representative image.

2. The information processing apparatus according to Claim 1, wherein:
the processor is configured to display a user image indicative of the other user on the representative image.

3. The information processing apparatus according to Claim 2, wherein:
the processor is configured to display the user image so that a form in which the user image is displayed in a case where the other user is viewing the document file and a form in which the user image is displayed in a case where the other user is editing the document file are different.

4. The information processing apparatus according to Claim 2 or 3, wherein:
the processor is configured to display the information indicative of the other user and the information indicative of the part in association with the user image in a case where an operation of the user on the user image is detected.

5. The information processing apparatus according to Claim 4, wherein:
the information indicative of the part includes a page number indicative of the part and a page image showing a whole page of the page number.

6. The information processing apparatus according to Claim 5, wherein:
the processor is configured to display an enlarged image in association with the page image in a case where an operation of the user on the page image is detected, the enlarged image being an image in which a portion of the page image that corresponds to a position where the operation of the user is detected is dynamically enlarged.

7. The information processing apparatus according to any one of Claims 1 to 6, wherein:
the other user is a plurality of other users; and
the processor is configured to display a plurality of user images indicative of the plurality of other users on the representative image.

8. The information processing apparatus according to Claim 7, wherein:
the processor is configured to dynamically enlarge a user image corresponding to a position where an operation of the user is detected among the plurality of user images.

9. The information processing apparatus according to Claim 7 or 8, wherein:
the processor is configured to display the plurality of user images indicative of the plurality of other users in a descending order of priority set in advance for each of the plurality of other users in a case where the plurality of user images indicative of the plurality of other users are displayed on the representative image.

10. The information processing apparatus according to any one of Claims 1 to 9, wherein:
the processor is configured to display an image indicative of the number of other users on the representative image.

11. The information processing apparatus according to Claim 10, wherein:
the processor is configured to display, in association with the image indicative of the number of other users, a list of information concerning viewing or editing of the other user(s) in a case where an operation of the user on the image indicative of the number of other users is detected.

12. The information processing apparatus according to any one of Claims 1 to 11, wherein:
the processor is configured to transmit a message inquiring a state of viewing or editing of the other user to the other user.

13. A program causing a computer to execute a process for information processing, the process comprising:
displaying a representative image representing a document file shared by a plurality of users on a screen of a terminal apparatus of a user, a single representative image being prepared for a single document file; and
in a case where another user is viewing or editing the document file, displaying information indicative of the other user and information indicative of a part of the document file which the other user is viewing or editing while displaying the representative image.

14. An information processing method comprising:
displaying a representative image representing a document file shared by a plurality of users on a screen of a terminal apparatus of a user, a single representative image being prepared for a single document file; and
in a case where another user is viewing or editing the document file, displaying information indicative of the other user and information indicative of a part of the document file which the other user is viewing or editing while displaying the representative image.

## Patentansprüche

1. Informationsverarbeitungsvorrichtung, umfassend:
einen Prozessor, der so konfiguriert ist, dass er:
ein Repräsentationsbild, das eine von mehreren Benutzern geteilte Dokumentdatei darstellt, auf einem Bildschirm einer Terminalvorrichtung eines Benutzers anzeigt, wobei ein einzelnes Repräsentationsbild für eine einzelne Dokumentdatei hergestellt wird; und
in einem Fall, in dem ein anderer Benutzer die Dokumentdatei betrachtet oder bearbeitet, Informationen, die den anderen Benutzer angeben, und Informationen, die einen Teil der Dokumentdatei, den der andere Benutzer betrachtet oder bearbeitet, angeben, anzeigt, während er das Repräsentationsbild anzeigt.

2. Informationsverarbeitungsvorrichtung nach Anspruch 1, wobei:
der Prozessor so konfiguriert ist, dass er ein Benutzerbild, das den anderen Benutzer angibt, auf dem Repräsentationsbild anzeigt.

3. Informationsverarbeitungsvorrichtung nach Anspruch 2, wobei:
der Prozessor so konfiguriert ist, dass er das Benutzerbild so anzeigt, dass sich eine Form, in der das Benutzerbild in einem Fall, in dem der andere Benutzer die Dokumentdatei betrachtet, angezeigt wird, und eine Form, in der das Benutzerbild in einem Fall, in dem der andere Benutzer die Dokumentdatei bearbeitet, angezeigt wird, unterscheiden.

4. Informationsverarbeitungsvorrichtung nach Anspruch 2 oder 3, wobei:
der Prozessor so konfiguriert ist, dass er die Informationen, die den anderen Benutzer angeben, und Informationen, die den Teil angeben, in Verknüpfung mit dem Benutzerbild in einem Fall, in dem eine Bedienung des Benutzers auf dem Benutzerbild detektiert wird, anzeigt.

5. Informationsverarbeitungsvorrichtung nach Anspruch 4, wobei:
die Informationen, die den Teil angeben, eine Seitenzahl, die den Teil angibt, und ein Seitenbild, das eine gesamte Seite der Seitenzahl zeigt, enthalten.

6. Informationsverarbeitungsvorrichtung nach Anspruch 5, wobei:
der Prozessor so konfiguriert ist, dass er ein vergrößertes Bild in Verknüpfung mit dem Seitenbild in einem Fall, in dem eine Bedienung des Benutzers auf dem Seitenbild detektiert wird, anzeigt, wobei das vergrößerte Bild ein Bild ist, in dem ein Abschnitt des Seitenbildes, der einer Position, an der die Bedienung des Benutzers detektiert wird, entspricht, dynamisch vergrößert wird.

7. Informationsverarbeitungsvorrichtung nach einem der Ansprüche 1 bis 6, wobei:
der andere Benutzer mehrere andere Benutzer sind; und
der Prozessor so konfiguriert ist, dass er mehrere Benutzerbilder, die die mehreren anderen Benutzer angeben, auf dem Repräsentationsbild anzeigt.

8. Informationsverarbeitungsvorrichtung nach Anspruch 7, wobei:
der Prozessor so konfiguriert ist, dass er ein Benutzerbild, das einer Position, an der eine Bedienung des Benutzers detektiert wird, entspricht, unter den mehreren Benutzerbildern dynamisch vergrößert.

9. Informationsverarbeitungsvorrichtung nach Anspruch 7 oder 8, wobei:
der Prozessor so konfiguriert ist, dass er die mehreren Benutzerbilder, die die mehreren anderen Benutzer angeben, in einer absteigenden Reihenfolge von im Voraus für jeden der mehreren anderen Benutzer eingestellter Priorität in einem Fall, in dem die mehreren Benutzerbilder, die die mehreren anderen Benutzer angeben, auf dem Repräsentationsbild angezeigt werden, anzeigt.

10. Informationsverarbeitungsvorrichtung nach einem der Ansprüche 1 bis 9, wobei:
der Prozessor so konfiguriert ist, dass er ein Bild, das die Anzahl an anderen Benutzern angibt, auf dem Repräsentationsbild anzeigt.

11. Informationsverarbeitungsvorrichtung nach Anspruch 10, wobei:
der Prozessor so konfiguriert ist, dass er in Verknüpfung mit dem Bild, das die Anzahl an anderen Benutzern angibt, eine Liste von Informationen in Bezug auf Betrachten oder Bearbeiten des/der anderen Benutzer(s) in einem Fall, in dem eine Bedienung des Benutzers auf dem Bild, das die Anzahl an anderen Benutzern angibt, detektiert wird, anzeigt.

12. Informationsverarbeitungsvorrichtung nach einem der Ansprüche 1 bis 11, wobei:
der Prozessor so konfiguriert ist, dass er eine Nachricht, die einen Zustand von Betrachten oder Bearbeiten des anderen Benutzers abfragt, an den anderen Benutzer überträgt.

13. Programm, das einen Computer veranlasst, einen Prozess zur Informationsverarbeitung auszuführen, wobei der Prozess umfasst:
Anzeigen eines Repräsentationsbildes, das eine von mehreren Benutzern geteilte Dokumentdatei darstellt, auf einem Bildschirm einer Terminalvorrichtung eines Benutzers, wobei ein einzelnes Repräsentationsbild für eine einzelne Dokumentdatei hergestellt wird; und
in einem Fall, in dem ein anderer Benutzer die Dokumentdatei betrachtet oder bearbeitet, Anzeigen von Informationen, die den anderen Benutzer angeben, und von Informationen, die einen Teil der Dokumentdatei, den der andere Benutzer betrachtet oder bearbeitet, angeben, während das Repräsentationsbild angezeigt wird.

14. Informationsverarbeitungsverfahren, umfassend:
Anzeigen eines Repräsentationsbildes, das eine von mehreren Benutzern geteilte Dokumentdatei darstellt, auf einem Bildschirm einer Terminalvorrichtung eines Benutzers, wobei ein einzelnes Repräsentationsbild für eine einzelne Dokumentdatei hergestellt wird; und
in einem Fall, in dem ein anderer Benutzer die Dokumentdatei betrachtet oder bearbeitet, Anzeigen von Informationen, die den anderen Benutzer angeben, und von Informationen, die einen Teil der Dokumentdatei, den der andere Benutzer betrachtet oder bearbeitet, angeben, während das Repräsentationsbild angezeigt wird.

## Revendications

1. Appareil de traitement d'informations comprenant :
un processeur configuré pour :
afficher, sur un écran d'un appareil terminal d'un utilisateur, une image représentative représentant un fichier de document partagé par une pluralité d'utilisateurs, une seule image représentative étant préparée pour un seul fichier de document ; et
dans un cas où un autre utilisateur consulte ou modifie le fichier de document, afficher des informations indicatives de l'autre utilisateur et des informations indicatives d'une partie du fichier de document que l'autre utilisateur consulte ou modifie, tout en affichant l'image représentative.

2. Appareil de traitement d'informations selon la revendication 1, dans lequel :
le processeur est configuré pour afficher une image d'utilisateur indicative de l'autre utilisateur sur l'image représentative.

3. Appareil de traitement d'informations selon la revendication 2, dans lequel :
le processeur est configuré pour afficher l'image d'utilisateur de sorte qu'une forme dans laquelle l'image d'utilisateur est affichée dans un cas où l'autre utilisateur consulte le fichier de document et une forme dans laquelle l'image d'utilisateur est affichée dans un cas où l'autre utilisateur modifie le fichier de document soient différentes.

4. Appareil de traitement d'informations selon la revendication 2 ou la revendication 3, dans lequel :
le processeur est configuré pour afficher les informations indicatives de l'autre utilisateur et les informations indicatives de la partie en association avec l'image d'utilisateur dans un cas où une opération de l'utilisateur sur l'image d'utilisateur est détectée.

5. Appareil de traitement d'informations selon la revendication 4, dans lequel :
les informations indicatives de la partie incluent un numéro de page indicatif de la partie et une image de page représentant une page entière correspondant au numéro de page.

6. Appareil de traitement d'informations selon la revendication 5, dans lequel :
le processeur est configuré pour afficher une image agrandie en association avec l'image de page dans un cas où une opération de l'utilisateur sur l'image de page est détectée, l'image agrandie étant une image dans laquelle une portion de l'image de page qui correspond à une position où l'opération de l'utilisateur est détectée est agrandie dynamiquement.

7. Appareil de traitement d'informations selon l'une quelconque des revendications 1 à 6, dans lequel :
l'autre utilisateur est une pluralité d'autres utilisateurs ; et
le processeur est configuré pour afficher une pluralité d'images d'utilisateur indicatives de la pluralité d'autres utilisateurs sur l'image représentative.

8. Appareil de traitement d'informations selon la revendication 7, dans lequel :
le processeur est configuré pour agrandir dynamiquement une image d'utilisateur correspondant à une position où une opération de l'utilisateur est détectée parmi la pluralité d'images d'utilisateur.

9. Appareil de traitement d'informations selon la revendication 7 ou la revendication 8, dans lequel :
le processeur est configuré pour afficher la pluralité d'images d'utilisateur indicatives de la pluralité d'autres utilisateurs dans un ordre décroissant de priorité définie à l'avance pour chacun de la pluralité d'autres utilisateurs, dans un cas où la pluralité d'images d'utilisateur indicatives de la pluralité d'autres utilisateurs sont affichées sur l'image représentative.

10. Appareil de traitement d'informations selon l'une quelconque des revendications 1 à 9, dans lequel :
le processeur est configuré pour afficher une image indicative du nombre d'autres utilisateurs sur l'image représentative.

11. Appareil de traitement d'informations selon la revendication 10, dans lequel :
le processeur est configuré pour afficher, en association avec l'image indicative du nombre d'autres utilisateurs, une liste d'informations concernant la consultation ou la modification par le ou les autres utilisateurs, dans un cas où une opération de l'utilisateur sur l'image indicative du nombre d'autres utilisateurs est détectée.

12. Appareil de traitement d'informations selon l'une quelconque des revendications 1 à 11, dans lequel :
le processeur est configuré pour transmettre, à l'autre utilisateur, un message demandant un état de consultation ou de modification de l'autre utilisateur.

13. Programme amenant un ordinateur à exécuter un processus de traitement d'informations, le processus comprenant :
afficher, sur un écran d'un appareil terminal d'un utilisateur, une image représentative représentant un fichier de document partagé par une pluralité d'utilisateurs, une seule image représentative étant préparée pour un seul fichier de document ; et
dans un cas où un autre utilisateur consulte ou modifie le fichier de document, afficher des informations indicatives de l'autre utilisateur et des informations indicatives d'une partie du fichier de document que l'autre utilisateur consulte ou modifie, to ut en affichant l'image représentative.

14. Procédé de traitement d'informations comprenant :
afficher, sur un écran d'un appareil terminal d'un utilisateur, une image représentative représentant un fichier de document partagé par une pluralité d'utilisateurs, une seule image représentative étant préparée pour un seul fichier de document ; et
dans un cas où un autre utilisateur consulte ou modifie le fichier de document, afficher des informations indicatives de l'autre utilisateur et des informations indicatives d'une partie du fichier de document que l'autre utilisateur consulte ou modifie, tout en affichant l'image représentative.
